# EUROPEAN PATENT APPLICATION

(11) **EP 2 500 828 A1**
(43) Date of publication of application: **19.09.2012**
(21) Application number: 11464001.4
(22) Date of filing: 17.03.2011
(51) Int. Cl.: G06F 13/28, G06F 13/32

(54) **Method for transferring data from a source address to a destination address**

(71) Applicant: Continental Automotive GmbH, 30165 Hannover (DE)
(72) Inventor: Ponoran, Vlad Razvan, 300362 Timisoara (RO)

(57) **Abstract**

The invention describes a method for transferring data from a source address location to a destination address location within a memory address space of a computing system. The computing system comprises a data bus (DB) for transferring data as well as a main processor (CPU), and a secondary processor (SP) connected to the data bus (DB). Furthermore, it comprises a memory (M) connected to the data bus (DB) and at least one peripheral component (PC), each of them being connected to the data bus (DB). The method comprises the step of transferring data from the source address location to the destination address location by way of a DMA transaction without intervention of the main processor (CPU) during the transaction itself wherein for the DMA transaction a DMA channel is emulated by the secondary processor (SP).

## Description

The invention relates to a computing system and a method for transferring data from a source address location to a destination address location within a memory address space of a computing system. The computing system comprises a data bus for transferring data as well as a main processor and a secondary processor both of them being connected to the data bus. Furthermore, the computing system comprises a memory connected to the data bus and at least one peripheral component, each of them being connected to the data bus, too.

Typically, when a main processor which is called central processing unit (CPU) transfers data by itself, it is fully occupied for the entire period of read and write operations implied. Therefore, the CPU is unavailable for performing other work.

Direct Memory Access (DMA) allows hardware subsystems within a computer system to access system memory for reading and/or writing independently of the central processing unit. DMA is often used in multiprocessor system-on-chips, where its processing element is equipped with a local memory and DMA is used for transferring data between the local memory and a main memory. Computer systems that have DMA channels can transfer data to and from devices (peripheral components) with much less CPU overhead than computer systems without a DMA channel. Similarly, a processing element inside a multi-core processor can transfer data to and from its local memory without occupying its processor time and allowing computation and data transfer concurrency.

A microcontroller using DMA is the TriCore® from Infineon Technologies. In the TriCore® microcontroller a dedicated DMA controller executes DMA transactions from a source address location to a destination address location without intervention of the CPU during the transfer itself. The CPU prepares the data source and destination addresses, the size of data to be transferred and afterwards on occurrence of a DMA request either by hardware or by software the data transfer takes place. The programming of the DMA module is handled by a dedicated driver.

Hence, known solutions for transferring data from a source address to a destination address location have the CPU involved at least partially.

It is therefore an object of the present invention to provide a method which allows the transferring of data from a source address location to a destination address location within a memory address space of a computing system with a minimum load for a main processor.

It is a further object of the present invention to provide a computing system which enhances the transferring of data from a source address location to a destination address location with minimum occupation of its main processor.

These objects are solved by a method according to the features of claim 1 and a computing system according to the features of claim 13. Preferred embodiments are set out in the dependent claims.

The invention provides a method for transferring data from a source address location to a destination address location within a memory address space of a computing system, the computing system comprising a data bus for transferring data; a main processor (CPU) connected to the data bus; a secondary processor connected to the data bus (DB) ; a memory (M) connected to the data bus (DB) ; and at least one peripheral component (PC), each of them being connected to the data bus (DB). The method comprises the step of transferring data from the source address location to the destination address location by way of a DMA transaction without intervention of the main processor during the transaction itself wherein for the DMA transaction a DMA channel is emulated by the secondary processor.

Furthermore, the invention provides a computing system, the computing system having a data bus for transferring data, a main processor, a secondary processor, a memory and at least one peripheral component, each of them being connected to the data bus. For transferring data from a source address location to a destination address location by way of a DMA transaction without intervention of the main processor during the transaction itself, the secondary processor is configured to emulate a DMA channel for the DMA transaction.

By using a secondary processor for data transfers load problems of the main processor (central processing unit CPU) can be avoided. Furthermore, emulating a DMA channel by the secondary processor enables an enhanced flexibility with improved capabilities compared to a conventional DMA controller transfer solution. Especially the number of DMA channels can be increased compared to a solution which uses only the DMA channels of the DMA controller.

In a preferred embodiment of the computing system according to the invention, the computing system is based on a TriCore® microprocessor, wherein the secondary processor is a peripheral control processor of the TriCore® microprocessor. The computing system according to the invention may be realized as microprocessor.

According to a preferred embodiment a hardware element assigned to one of the peripheral component being adapted to receive service requests in case of a requested data transfer due to a hardware event on the peripheral component transmits it (the service request) through an interrupt system to the secondary processor for handling the service request. Alternatively a hardware element being adapted to receive service requests in case of a requested data transfer due to a software event being initiated by the main processor or the secondary processor transmits it through an interrupt system to the secondary processor for handling the service request.

For emulating the DMA channel a PCP channel and a first ser-vice request node to be used for triggering a data transfer may be used wherein the service request node is assigned to a specific peripheral component representing the source address location. Additionally, for emulating the DMA channel a second service request node to be used for triggering an end of completed data transfer may be used wherein the service re-quest node is assigned to a further specific peripheral component representing the destination address location.

According to a further embodiment, the main processor (CPU) will perform initialization of the service request before 1^{st} the start of a emulated transaction and in case a service request is issued the service request will lead to executing a predefined code on the secondary processor for the specific channel used for the DMA emulation. Furthermore, the main processor initializes the secondary processor regarding which is the code to be executed at each transfer. In case the computing system is a TriCore® microprocessor the predefined code is called PCP code (Peripheral Control Processor code).

To enable enhance flexibility in controlling the emulated DMA channel, the initialization data comprises one or more of the below information:
a) width of data involved in one data move operation, wherein the data move operation shall consist of a read move, that loads data from a source address into a register of the secondary processor, and a write move, that stores the data from the secondary processor register to a destination address;
b) initial source address;
c) initial destination address;
d) number of moves to be executed within one transfer which consists of one or more move operations;
e) rule to maintain the data source address after each executed move operation;
f) rule to maintain the data destination address after each executed move operation;
g) number of transfers corresponding to one complete transaction, wherein each transaction consists of one or more transfers;
h) rule to generate a service request on the end of transfer or end of transaction;
i) rule to execute a complete transaction on a single transfer request;
j) auto restart transaction rule.

The address maintenance may comprise to leave the address not modified; or to increase or decrease the address with a specific value in order to point to an entire number of data units after or before the data address which was used during the last move; or use a next address from the predefined set of values for enabling a non-linear access order.

According to a further preferred embodiment generating a service request on end of transfer or end of transaction dictates whether on the transfer completion or the transaction completion a service request has to be raised or not. In case that a service request was generated due to the end of a transfer which also corresponds to an end of a transaction, it is preferred that for the end of transaction one more service request will not be generated.

According to a further preferred embodiment for an auto restart transaction rule a counter of executed transfers and/or the data source address and/or the data destination address is set to an initialization value.

According to a further preferred embodiment, a counter of remaining transfers being part of a transaction is monitored during a data transfer.

According to a further preferred embodiment a further hardware element receiving a service request initiated by the secondary processor will forward the service request to the interrupt system of the main processor or the secondary processor for executing the service request.

The invention will be described in more detail with reference to the figures.
- Fig. 1: shows a schematic graph of the method according to the invention.
- Fig. 2: shows a global view of the mechanism of the method according to the invention.
- Fig. 3: shows a computing system according to the invention.

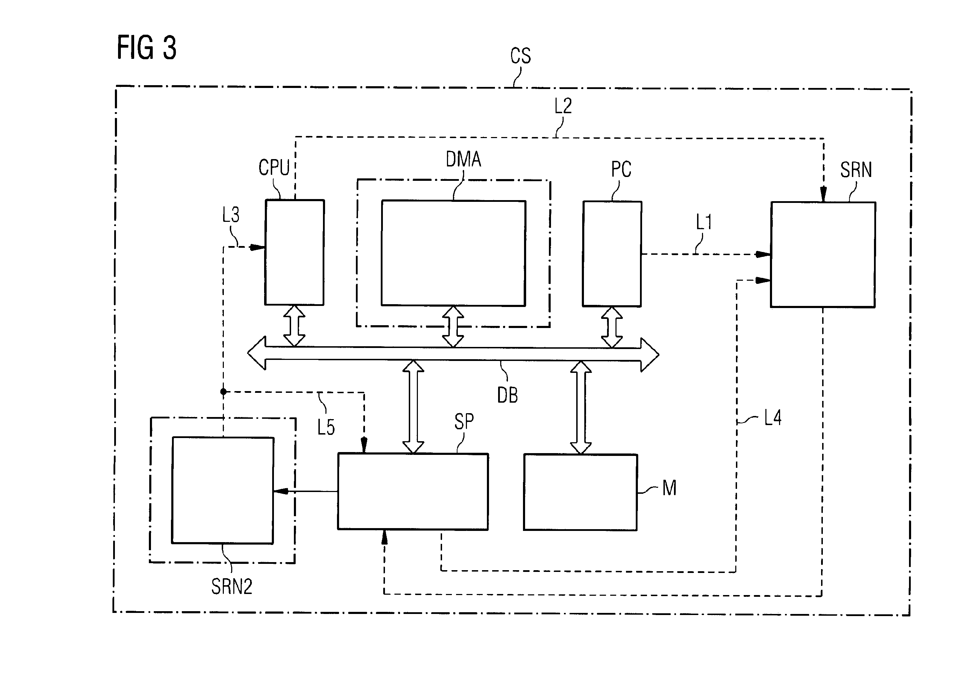

Fig. 3 shows a schematic representation of a computing system CS with an improved mechanism for transferring data from a source address location to a destination address location within a memory address space of the computing system. The computing system CS comprises a data bus DB for transferring data. A microprocessor MP comprising a main processor CPU, an optional Direct Memory Access controller DMA and a secondary processor SP is connected to the data bus DB. Furthermore, the computing system comprises a memory M connected to the data bus DB as well as at least one peripheral component PC. An interrupt service request node SRN is assigned to each of the peripheral components PC. A further service request node SRN 2 communicatively connected to the secondary processor SP and the main processor CPU. In Fig. 3 only one peripheral component and its assigned interrupt service request node is outlined.

In Fig. 3 a communication between the outlined components is as follows:
L1 depicts a link used for a transfer request initiated by hardware. L2 depicts a link used for a transfer request initiated by software executed on the main processor CPU. L3 depicts a link for a lateron explained status ST4 in case the main processor treats the status ST3. L4 depicts a link used for a transfer request initiated by software executed on the secondary processor SP. L5 depicts a link for the status ST4 in case that the secondary processor treats the status ST4.

Preferably, the microprocessor MP is based on Infineon' s TriCore® microcontroller family where the secondary processor is called peripheral control processor PCP. In the following description of the invention reference is made to the architecture of the TriCore® microprocessor. However, it is to be understood that this is only by way of example.

Since the architecture of Infineon's TriCore® microprocessor as well as the functionality of the interrupt service request nodes is known from prior art, a detailed description of these components is omitted in the present description.

The peripheral control processor PCP will be used to handle a data transfer from a given source address to a given destination address. Therefore, each interrupt service request node SRN assigned to a specific peripheral component PC is mapped to the interrupt system of the peripheral control processor PCP. An interrupt service request can be the result either due to a hardware based event or due to a software initiated interrupt.

In order to emulate a DMA channel, an interrupt service request node SRN is directed towards a specific PCP channel which shall emulate the DMA channel. For emulating a DMA channel one PCP channel and one interrupt service request node to be used for triggering a transfer need to be used. Additionally, a further interrupt service request node may be used for triggering execution of custom code at the end of a completed transfer; the custom code could be executed either by the main processor CPU or by the secondary processor SP. A PCP code used by PCP channels which shall emulate a DMA channel will be executed on a service request issued by the previous interrupt service request node SRN. As result of a raised service request, the PCP code associated to the PCP channel shall be executed. A service request will be hardware triggered if it is raised by the peripheral component associated to that interrupt service request node. As will be apparent the peripheral component PC must be configured to have the interrupt request enabled. Alternatively, the service request may be triggered by software if it is raised by the main processing unit CPU or the peripheral control processor PCP. In order to work with hardware triggered transfers during an initialization phase, the main processor CPU has to be configured to enable the interrupt service request raising on hardware events assigned to the above mentioned interrupt service request node SRN.

The data transfer from a source address location to a destination address location is called a transaction which consists of one or more transfers. The PCP code executes one transfer consisting of one or more data moves. A data move operation consists of two main parts: First, a read move that loads data from the specified source address through the data bus into a PCP register. Second, a write move that stores data from the PCP register to the specified data destination through the data bus. The data width of read and write operations shall be identical, e.g. 8 bits, 16 bits or 32 bits. The peripheral control processor PCP may natively access data having width of 8 bits, 16 bits and 32 bits on the data bus which is a flexible peripheral interconnect bus (FPI) in case of the TriCore® microprocessor. Thus, the above mentioned read and write moves are made directly implementable.

For each PCP channel used for a DMA emulation the main processor CPU provides initialization information data. The initialization information data consists in:
1) width of the data involved in 1 move (8 bits, 16 bits, 32 bits);
2) initial data source address;
3) initial data destination address;
4) number of moves to be executed during one transfer;
5) rule to maintain the data source address after each executed move operation;
6) rule to maintain the data destination address after each executed move operation;
7) underflow/overflow address for source to be used in circular access mode;
8) underflow/overflow address for destination to be used in circular access mode;
9) set of addresses for source to be used in non-linear access mode;
10) set of addresses for destination to be used in non-linear access mode;
11) number of transfers corresponding to one complete transaction;
12) rule to generate a service request on end of transfer or on end of transaction;
13) rule to execute a complete transaction on a single transfer request;
14) auto restart transaction rule.

The initialization information data may be used for a flexible and efficient data transfer. For example, there are several possible rules for address maintenance at the end of a data move:
- The address may be not modified.
- The address may be increased/decreased with a specific value in order to point to an entire number of data units after/before the data address which was used during the last move. This means that the actual address increase/decrease will be dictated by the used data width. For example, if the initial address is 0 × 1000 (hexadecimal), data width is 8 bits and the specified number of units for increasing the address is 1, then the address will be increase to 0 × 1001 (hexadecimal). If, for example, the initial address is 0 × 1010 (hexadecimal), the data width is 32 bits and the specified number of units for decreasing the address is 2, then the address shall be decreased to 0 × 1008 (hexadecimal). After applying the address increase/decrease formula, the obtained address will be checked against a specified overflow/underflow value. If this value is passed by, the address will be updated to be the initialization address, thus implementing a circular access order.
- The next address may be used from a predefined set of values. This enables a non-linear access order.

By having the possibility to apply different rules for address maintenance the flexibility of the DMA channel emulated by the peripheral control processor is enhanced.

The rules furthermore allow generating a service request on end of transfer or end of transaction. The service request dictates whether on the transfer completion or on the transaction completion a service request must be raised or not. In case that the service request is configured to be raised on each transfer completion, than on the transfer corresponding to the end of the transaction, one second service request corresponding to the end of transaction will not be raised. In this case, only one service request instead of two service requests is raised.

The complete transaction on single transfer request rule dictates whether on a single transfer request an entire transaction shall take place. In case it is not enabled, after each transfer the transaction shall be interrupted. Otherwise all the transfers which are part of the transaction shall be executed on a single transfer request.

The auto restart transaction rule dictates whether on the end of a transaction a new transaction shall be restarted based on previous transaction initialization. This means that the counter of executed transfers shall be updated back to an initialization value as well as the data source address and the data destination address will be updated to their initialization values.

As described above, as result of a raised service request, the PCP code associated to the PCP channel of an interrupt service request node will be executed. The PCP code executes one transfer consisting of one or more data moves. After each data move the rules defined for maintaining the source and destination addresses associated to a move operation will be applied. One complete transfer will be executed. At the end of the transfer the rule to generate a service request on end of transfer may optionally be applied. At the end of the transfer, the counter of remaining transfers part of the transaction will be decremented. If the counter of the remaining transfer of the transaction is not 0, it shall be checked whether a complete transaction must be executed on a single request and if so, a new transfer will be executed. If a complete transaction does not have to be completed, than the PCP code will be interrupted. If the transaction is completed, the rule to generate a service request on the end of a transaction will be applied.

In case that the continuous mode is enabled, i.e. a circular access order is implemented due to a dedicated address maintenance rule, the counter of transfers is set to the number of transfers corresponding to a complete transaction. The data source and destination addresses will be updated back to their initialization values in order to prepare a new transaction. Otherwise, if the continuous mode is not enabled the service request generation on the interrupt service request node SRN used as a trigger for the start of a transfer is disabled.

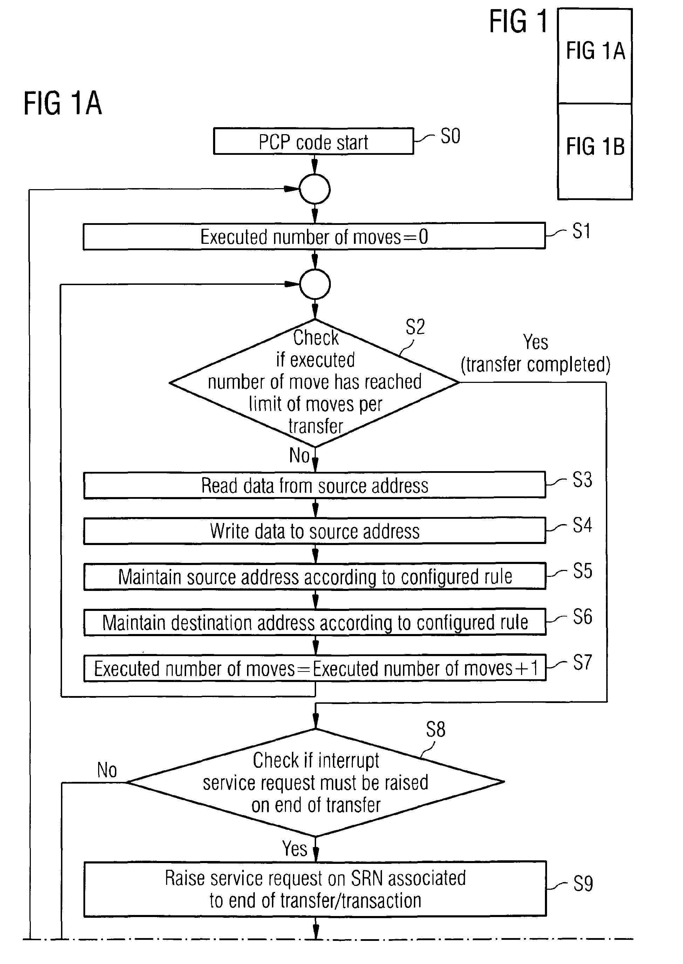

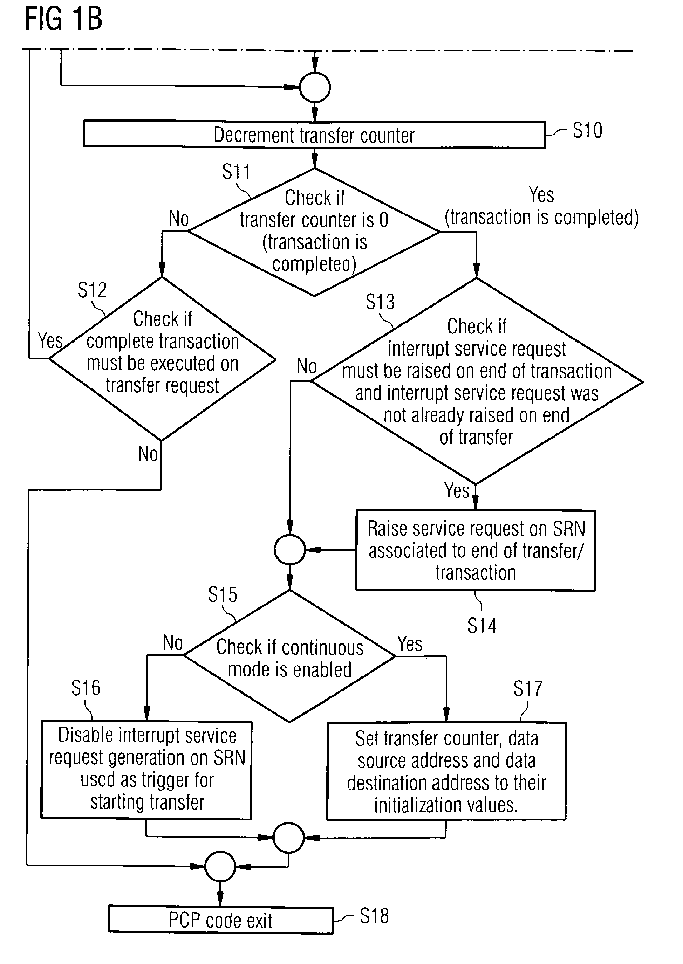

Fig. 1 shows a graph illustrating the details of a method described above. In step S0 the PCP code is started. In step S1 the executed number of moves is set to 0. Then, it is checked whether the executed number of moves has reached a predefined limit of moves per transfer (step S2). If the transfer is already completed, i.e. the answer to the check is "Yes", it is proceeded with step S8 . In case that the check has failed ("No") data from the source address is read (step S3). In step S4 the data is written to the destinated source address. According to a configured rule the source address is maintained (step S5). As well the destination address according to the configured rule stays maintained (step S6). In step S7 the executed number of moves is increased. The method proceeds with step S2 again.

In step S8 it is checked if an interrupt service request must be raised on the end of the transfer. If the check is positive ("Yes") a service request is raised on the interrupt service request node SRN which is associated to the end of the transfer or the transaction. If the result to the check in step S8 is negative ("No") step S9 will be missed and it will be proceeded directly with step S10. In step S10 the transfer counter is decremented. In step S11 it is checked whether the transfer counter is 0, i.e. the transaction is completed. If the latter is not the case ("No"), it is checked in step S12 whether a complete transaction must be executed on the transfer request. If this check is positive ("Yes") the method returns to step S1. If the check in step S12 is negative ("No") the PCP code is interrupted in step S18.

In case that the check whether the transaction is completed or not (step S11) is positive ("Yes") in step S13 it is checked whether the interrupt service request must be raised on the end of transaction and it was not already raised due to end of transfer(S8). If the result is "Yes" a service request on the interrupt service request node SRN is raised which is associated to the end of the transfer and transaction, respectively. The method proceeds with step S15. In case that the answer to the check in step S13 is "No" it is directly proceeded with step S15. In step S15 it is checked whether the continuous mode is enabled. Is this the case ("Yes") a transfer counter, the data source address and the data destination address are set to their initialization values (step S17). Afterwards, the PCP code is interrupted in step S18. In case that the check in step S15 is negative ("No") in step S16 the interrupt service request generation on the interrupt service request node SRN which is used as trigger for starting a transfer is enabled. After this, the PCP code is interrupted (step S18).

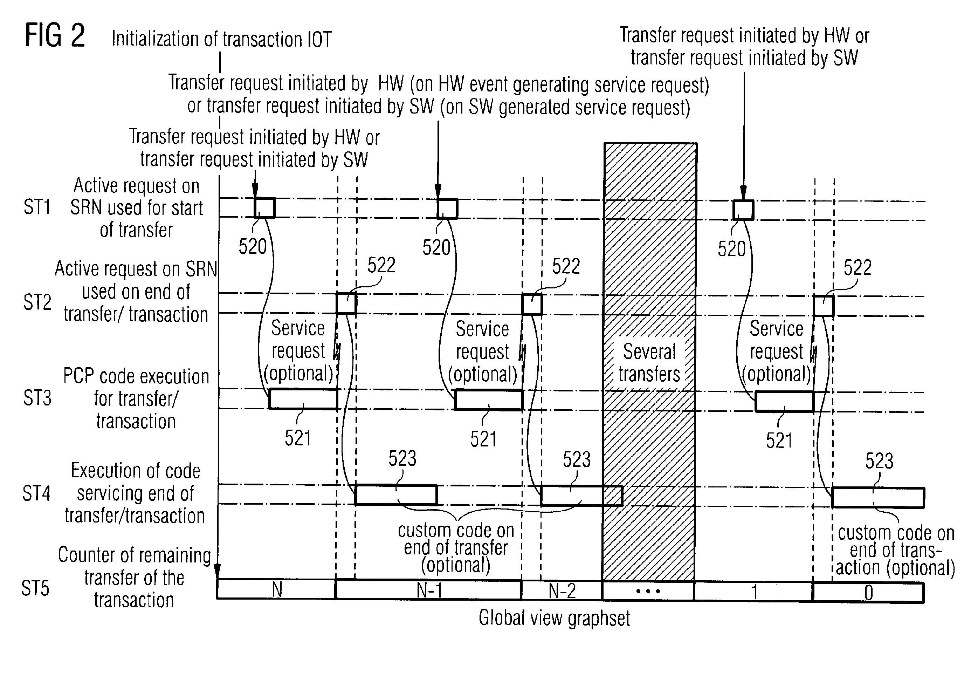

Fig. 2 illustrates the mechanism of the method according to the invention in a global view. On the x-axis the transfer counter starting with N and being decremented until 0 (corresponding to ST5) is outlined. The y-axis shows the status of the computing system. ST1 represents an active request on the interrupt service request node SRN used for the start of transfer, but not yet taken into account by the secondary processor. ST2 represents an active request on the interrupt service request node SRN used on the end of a transfer and a transaction, respectively. ST3 represents the PCP code execution for a transfer and transaction, respectively (as effect of a previous active request ST1). ST4 represents the optional execution of code servicing the end of transfer and transaction, respectively (as optional effect of code execution done in ST3) . ST5 represents the counter of remaining transfers of the transaction N, N―1, N-2, ..., 1, 0.

After an initialization of the transaction IOT, in step S20 a transfer request initiated by hardware or a transfer request initiated by software is triggered. The status changes from ST1 to ST3; During ST3, the steps S0 to S18 are executed. Some of them execute optional, which depends on the case. In step S21 an optional service request is issued. The part of ST3/S21 when the optional service is requested is actually S8 with Yes branch taken, thus S9 executed, or S13 with Yes branch taken, thus S14 executed. The status changes optionally from ST3 to ST2 where the counter of the remaining transfers of the transaction already has been decremented by 1 (due to S10).

ST2 represents the fact that a request to execute custom code on end of transfer/transaction is issued but not yet taken into account. ST4 represents the fact that the execution of corresponding custom code by the processor configured to treat it is in progress.

Then the status changes from ST2 to ST4 where in step S23 optionally a custom code on the end of transfer is executed. After that, the sequence starting with step 20 until step S23 will be repeated until the counter of remaining transfers of the transaction has reached 0.

The figure 2 presents a global view in a simplified way through the fact that ST1/S20, ST3/S21, S2/S22 and ST4/S23 are executed strictly sequentially. In practice, once that the request represented by S20 is taken into account, meaning start of S21, a new request S20 could arrive before the S21 end; that new request S20 would be treated by a new S21 execution as soon as the previous S21 execution is ended. In a similar way, once that the request represented by S22 is taken into account, meaning start of S23, a new request S22 could arrive before the S23 end; that new request S22 would be treated by a new S23 execution as soon as the previous S23 execution is ended. However, the cases presented in current paragraph do not represent typical behaviour and they would be the caused by secondary processor high execution load, respectively main processor high execution load.

In an alternative embodiment the auto restart transaction rule could be altered regarding the update of the data source and destination addresses to be a value different than their initialization value.

In a further alternative embodiment the base solution executes explicit load (from source address to secondary processor register) and store assembler instructions (from secondary processor register to destination address), for each data unit that have to be moved, would be replaced with other assembler instructions. The PCP assembler instructions COPY/BCOPY could be used to execute several data moves triggered by one assembler instruction, requiring an advance preparation of source and destination addresses in specific PCP registers used by the mentioned instructions (registers R4 and R5). Furthermore, setup of used counter CNT1 in register R6 is required. The counter CNT0 used by COPY/BCOPY is part of the operation code (opcode) of the instruction, thus making necessary to have all the COPY/BCOPY instruction combinations with all the CNT0 possible values used in a fixed code and at run time a jump to the COPY/BCOPY having the desired CNT0 to be executed.

Since the mentioned instructions support only a transfer that the involved source and destination addresses to be incremented/decremented by 1 or left not modified after each move data unit, the flexibility maintaining the addresses after each move would be reduced.

The copy instructions support moving data unit having a width equal to 8 bits, 16 bits or 32 bits but the BCOPY supports only moving 32 bits data, thus the BCOPY instruction is usable in a reduced set of use cases.

As mentioned above, using a secondary controller for transferring data from a source address location to a destination address location within a memory address space of a computer system avoids a load problem of the main processor of the microprocessor. The following advantages result due to the proposed solution:
The existence of hardware mechanisms which receive an interrupt service request from the different peripheral components, i.e. requests which could be oriented to be serviced by the secondary processor, gives an improved flexibility.

In contrast, by using a dedicated DMA controller, the flexibility is not at a degree so high because there are up to 16 selectable request inputs per DMA channel. At some point no DMA channel could be available for a certain peripheral component if the DMA channels which could handle it are already in use for other peripheral components.

In case of using a TriCore® microprocessor the maximum number of PCP channels is at least 63 and maximum 255. The number of 63 PCP channels is available in case that a full context model is used. 255 PCP channels may be available if the minimum context model is used. Therefore, the maximum number of emulated DMA channels is increased, greater than the usual number provided by the DMA controller embedded in the TriCore® microprocessor. Typically, there are eight or 16 DMA channels for currently available controllers.

The secondary processor-based solution which is based on written software can offer additional features compared to a fixed available hardware DMA controller solution. For example, the secondary processor can offer ways of treating the address maintenance after each executed move in ways not supported by a DMA controller. A non-linear addressing node of the source and destination address can be provided by the peripheral processor-based solution. Instead, a state of the art hardware DMA controller-based solution may only provide a circular addressing maintenance mode.

## Claims

1. A method for transferring data from a source address location to a destination address location within a memory address space of a computing system, the computing system comprising
- a data bus (DB) for transferring data;
- a main processor (CPU) connected to the data bus (DB);
- a secondary processor (SP) connected to the data bus (DB);
- a memory (M) connected to the data bus (DB); and
- at least one peripheral component (PC), each of them being connected to the data bus (DB);
the method comprising the step of transferring data from the source address location to the destination address location by way of a DMA transaction without intervention of the main processor (CPU) during the transaction itself wherein for the DMA transaction a DMA channel is emulated by the secondary processor (SP).

2. The method according to claim 1, wherein a hardware element (SRN) assigned to one of the peripheral component (PC), being adapted to receive service requests in case of a requested data transfer due to a hardware event on the peripheral component (PC) transmits it through an interrupt system to the secondary processor (SP) for handling the service request.

3. The method according to claim 1 or 2, wherein a hardware element (SRN) being adapted to receive service requests in case of a requested data transfer due to a software event being initiated by the main processor (CPU) or the secondary processor (SP) transmits it through an interrupt system to the secondary processor (SP) for handling the service request.

4. The method according to claim 1 or 2, wherein the hardware element (SRN) is mapped to a specific channel of a number of channels of the peripheral component (PC).

5. The method according to one of the preceding claims, wherein the main processor (CPU) will perform initialization of the service request before the start of a transaction and in case a service request is issued the service request will lead to executing a predefined code on the secondary processor (SP) for the specific channel used for the DMA emulation.

6. The method according to one of the preceding claims, wherein the main processor (CPU) initializes the secondary processor (SP) regarding which is the code to be executed at each transfer.

7. The method according to claims 5 or 6, wherein the initialization data comprises one or more of below information:
a) width of data involved in one data move operation, wherein the data move operation may be a read move or a write move;
b) initial source address;
c) initial destination address;
d) number of moves to be executed within one transfer which consists of one or more move operations;
e) rule to maintain the data source address after each executed move operation;
f) rule to maintain the data destination address after each executed move operation;
g) number of transfers corresponding to one complete transaction, wherein each transaction consists of one or more transfers;
h) rule to generate a service request on the end of transfer or end of transaction;
i) rule to execute a complete transaction on a single transfer request;
j) auto restart transaction rule.

8. The method according to claim 7, wherein address maintenance may comprise
- to leave the address not modified; or
- to increase or to decrease the address with a specific value in order to point to an entire number of data units after or before the data address which was used during the last move; or
- use a next address from the predefined set of values for enabling a non-linear access order.

9. The method according to claims 7 or 8, wherein generating a service request on end of transfer or end of transaction dictates whether on the transfer completion or the transaction completion a service request has to be raised or not.

10. The method according to claims 7 to 9, wherein for an auto restart transaction rule a counter of executed transfers and/or the data source address and/or the data destination address is set to an initialization value.

11. The method according to claims 7 to 10, wherein a counter of remaining transfers being part of a transaction is monitored during a data transfer.

12. The method according to one of the preceding claims, wherein a further hardware element (SRN2) receiving a service request initiated by the secondary processor will forward the service request to the interrupt system of the main processor (CPU) or the secondary processor for executing the service request.

13. A computing system, the computing system having a data bus (DB) for transferring data, a main processor (CPU), a memory (M) and at least one peripheral component (PC), and a secondary processor (SP), each of them being connected to the data bus (DB), wherein for transferring data from a source address location to a destination address location by way of a DMA transaction without intervention of the main processor (CPU) during the transaction itself the secondary processor (SP) is configured to emulate a DMA channel for the DMA transaction.

14. The computing system according to claim 13, wherein it is based on a TriCore® microprocessor (MP), wherein the secondary processor (SP) is a Peripheral Control Processor (PCP) of the TriCore® microprocessor (MP).

15. The computing system according to claim 13 or 14, wherein it comprises further means for carrying out the method according to one of claims 2 to 12.
